(19) Europäisches Patentamt
European Patent Office
Office européen des brevets

(11) **EP 2 162 789 B1**

(12) **EUROPÄISCHE PATENTSCHRIFT**

(45) Veröffentlichungstag und Bekanntmachung des Hinweises auf die Patenterteilung:
**20.07.2016 Patentblatt 2016/29**

(51) Int Cl.:
***G02F 1/39*** *(2006.01)*

(21) Anmeldenummer: **08759880.1**

(22) Anmeldetag: **21.05.2008**

(86) Internationale Anmeldenummer:
**PCT/EP2008/056279**

(87) Internationale Veröffentlichungsnummer:
**WO 2008/145588 (04.12.2008 Gazette 2008/49)**

(54) **VORRICHTUNG UND VERFAHREN ZUR ERZEUGUNG UND ERFASSUNG KOHÄRENTER ELEKTROMAGNETISCHER STRAHLUNG IM THz-FREQUENZBEREICH**

DEVICE AND METHOD FOR GENERATING AND DETECTING COHERENT ELECTROMAGNETIC RADIATION IN THE THZ FREQUENCY RANGE

DISPOSITIF ET PROCÉDÉ DE PRODUCTION ET DE DÉTECTION D'UN RAYONNEMENT ÉLECTROMAGNÉTIQUE COHÉRENT DANS LA GAMME DE FRÉQUENCES DES ONDES THZ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **01.06.2007 DE 102007025891**

(43) Veröffentlichungstag der Anmeldung:
**17.03.2010 Patentblatt 2010/11**

(73) Patentinhaber: **Johann Wolfgang Goethe-Universität Frankfurt am Main**
**60325 Frankfurt am Main (DE)**

(72) Erfinder:
• **LÖFFLER, Torsten**
**61479 Glashütten (DE)**
• **ROSKOS, Hartmut**
**61473 Kronberg (DE)**
• **BEIGANG, René**
**67705 Trippstadt (DE)**

(74) Vertreter: **WSL Patentanwälte Partnerschaft mbB**
**Kaiser-Friedrich-Ring 98**
**65185 Wiesbaden (DE)**

(56) Entgegenhaltungen:
• GUO R ET AL: "Detection of coherent tunable THz-wave using of stimulated polariton scattering in MgO:LiNbO3" PROCEEDINGS OF SPIE - THE INTERNATIONAL SOCIETY FOR OPTICAL ENGINEERING - NONLINEAR OPTICS AND APPLICATIONS II 2007 SPIE US, Bd. 6582, 8. Mai 2007 (2007-05-08), Seiten 65820Z-1-65820Z-8, XP002496498
• CAO HUA ET AL: "Coherent detection of pulsed narrowband terahertz radiation" APPLIED PHYSICS LETTERS, AIP, AMERICAN INSTITUTE OF PHYSICS, MELVILLE, NY, Bd. 88, Nr. 1, 3. Januar 2006 (2006-01-03), Seiten 11101-011101, XP012080343 ISSN: 0003-6951
• KAWASE K ET AL: "Terahertz wave parametric source" JOURNAL OF PHYSICS D. APPLIED PHYSICS, IOP PUBLISHING, BRISTOL, GB, Bd. 35, Nr. 3, 7. Februar 2002 (2002-02-07), Seiten R1-R14, XP002348893 ISSN: 0022-3727
• FABIAN FRIEDERICH ET AL: "THz Active Imaging Systems With Real-Time Capabilities", IEEE TRANSACTIONS ON TERAHERTZ SCIENCE AND TECHNOLOGY, IEEE, PISCATAWAY, NJ, USA, vol. 1, no. 1, 1 September 2011 (2011-09-01), pages 183-200, XP011382543, ISSN: 2156-342X, DOI: 10.1109/TTHZ.2011.2159559

**Beschreibung**

Die vorliegende Erfindung betrifft eine Vorrichtung zur Erzeugung und Erfassung kohärenter elektromagnetischer Strahlung im THz-Frequenzbereich mit einem optisch parametrischen Oszillator zur Erzeugung elektromagnetischer Strahlung im THz-Frequenzbereich.

Die vorliegende Erfindung betrifft darüber hinaus ein Verfahren zur Erzeugung und Erfassung kohärenter elektromagnetischer Strahlung im THz-Frequenzbereich, wobei ein optisch parametrischer Oszillator zur Erzeugung elektromagnetischer Strahlung im THz-Frequenzbereich verwendet wird.

Im Frequenzbereich zwischen 100 GHz und 10 THz, auch als ferninfraroter Spektralbereich bezeichnet, sind viele Materialien, wie zum Beispiel Papier und eine Reihe von Kunststoffen, transparent und können durchleuchtet werden. Wasser dagegen besitzt bei diesen Frequenzen starke Absorptionslinien. Daraus ergeben sich potentielle Anwendungen insbesondere für bildgebende THz-Systeme, zum Beispiel die Untersuchung biomedizinischer Gewebe, wobei der unterschiedliche Wassergehalt zwischen gesundem und pathologischem Gewebe beispielsweise die Aufnahme eines kontrastreichen Bildes ermöglicht, Qualitätskontrollen, Verpackungskontrollen, Sicherheitskontrollen sowie die Überwachung chemischer Reaktionen. Dabei entspricht die Frequenz von 1 THz einer Wellenlänge der elektromagnetischen Welle von 300 $\mu$m und einer Photonenenergie von 4,14 eV bzw. von 33 Wellenzahlen.

Gegenüber der herkömmlicherweise für die meisten der zuvor genannten Anwendungen verwendeten Röntgenstrahlung besitzt die THz-Strahlung den Vorteil niedriger Photonenenergien, d.h. es entstehen keine gesundheitsschädlichen Schädigungen durch ionisierende Strahlung.

Motiviert durch diese potentiellen Anwendungen sind in den vergangenen Jahren unterschiedliche Quellen zur Erzeugung kohärenter THz-Strahlung entwickelt worden. In dem US-Patent 6,697,186 B2 wird ein THz-Wellengenerator offenbart, der einen nichtlinear optischen Kristall zur parametrischen Erzeugung und eine erste Laservorrichtung zum Injizieren eines monofrequenten ersten Laserstrahls als Pumpwelle in dem nichtlinear optischen Kristall aufweist. In dieser Anordnung ist es möglich, eine THz-Welle durch Verwendung des parametrischen Effekts in dem nichtlinear optischen Kristall unter einer nicht kollinearen Phasenanpassungsbedingung zu erzeugen, wodurch die Leistung der THz-Welle erhöht und ihre spektrale Breite eingeengt wird.

In dem Übersichtsartikel von Kodo Kawase et al. "Terahertz parametric sources and imaging applications", Semicond. Sci. Technol. Band 20 (2005), Seiten S. 258 ff. wird ein optischer parametrischer Oszillator beschrieben, der zur Erzeugung kohärenter abstimmbarer THz-Wellen die effiziente parametrische Streuung von Laserlicht über ein Polariton (stimulierte Polariton-Streuuung) in einem nichtlinear optischen Kristall nutzt. Ein Polariton ist ein Quant eines gekoppelten transversalen Phonon-Photonwellenfeldes und stimulierte Polariton-Streuung tritt auf, wenn die Pumpanregung von polaren Kristallen ausreichend stark ist. Solche polaren Kristalle sind beispielsweise Lithiumniobat ($LiNbO_3$), Lithiumtantalat ($LiTaO_3$) und Galliumphosphit (GaP), die sowohl infrarotaktiv als auch ramanaktiv sind. Der Streuprozeß umfaßt sowohl nichtlineare Prozesse zweiter als auch dritter Ordnung. Daher tritt eine starke Wechselwirkung zwischen der Pumpwelle, einer Idler-Welle und der Polariton- bzw. Signalwelle auf, wobei die Polariton-Welle die zu erzeugende THz-Welle ist.

Die aus dem Stand der Technik bekannten THz-Systeme, welche optisch parametrische Oszillatoren zur Erzeugung von THz-Strahlung verwenden, detektieren bzw. erfassen die derart generierte Strahlung mit Hilfe herkömmlicher thermischer Detektoren. Diese thermischen Detektoren sind insbesondere pyroelektrische Detektoren und Bolometer. Diese müssen, um ausreichende Signal-zu-Rausch-Verhältnisse zu ermöglichen, bei tiefen Temperaturen, d.h. in kryogener Umgebung, betrieben werden. Dies bringt es mit sich, daß diese Detektoren aufwendig konstruiert sind und nur für einen Labor- oder Forschungsbetrieb geeignet sind. Darüber hinaus ermöglichen die herkömmlichen thermischen Detektoren lediglich die Erfassung der auf das Detektorelement einfallenden intensität bzw. Leistung, nicht aber der Phase der THz-Strahlung. Gerade in der Phaseninformation steckt jedoch ein erhebliches Potential zur Informationsgewinnung, insbesondere für spektroskopische und bildgebende Anwendungen.

Die Publikation von R. Guo et al.: "Detection of Coherent Tunable THz-Wave Using of Stimulated Polariton Scattering in MgO:LiNbO3" proceedings of SPIE - The International Society for Optical Engineering - Nonlinear Optics and Applications II/2007 SPIE US Bd. 6582, 8. Mai 2007, Seiten 65820Z-1-65820Z-8, XP002496498 offenbart einen optisch parametrischen Generator sowie einen elektrooptischen Detektor zur Erfassung der mit dem optisch parametrischen Generator erzeugten THz-Strahlung, wobei zur Erfassung der Phase der THz-Strahlung die erzeugte THz-Strahlung mit der durch den nichtlinear optischen Kristall des optisch parametrischen Generators hindurch tretenden Pumpstrahlung in einem nichtlinear optischen Kristall gemischt wird.

Die Veröffentlichung von K. Kawase et al.: "Terahertz Wave Parametric Source" Jounal of Physics D. Applied Physics, IOP Publishing, Bristol, GB, Bd. 35, Nr. 3, 7. Februar 2002, Seiten R1-R14, XP002348893 ISSN: 0022-3727 offenbart einen optisch parametrischen Oszillator zur Erzeugung von THz-Strahlung.

Gegenüber diesem Stand der Technik ist es daher Aufgabe der vorliegenden Erfindung, eine Vorrichtung zur Erzeugung und Erfassung elektromagnetischer Strahlung im THz-Frequenzbereich bereitzustellen, wobei zur Erzeugung der THz-Strahlung ein optisch parametrischer Oszillator verwendet wird und der Detektor einen Betrieb bei Raumtemperatur unter Alltagsbedingungen ermöglicht.

Um zur Lösung dieser Aufgabenstellung beizutragen, wird erfindungsgemäß eine Vorrichtung zur Erzeugung und Erfassung kohärenter elektromagnetsicher Strahlung im THz-Frequenzbereich gemäß Anspruch 1 vorgeschlagen.

Dabei weist ein optisch parametrischer Oszillator im Sinne der vorliegenden Erfindung einen polaren nichtlinearen optischen Kristall zum Beispiel aus Lithiumniobat ($LiNbO_3$), Lithiumtantalat ($LiTaO_3$) oder Galliumphosphit (GaP) auf. Dabei basiert die optisch parametrische Oszillation zur Erzeugung der THz-Strahlung auf dem phononenähnlichen Verhalten von Polaritonen im Bereich der Resonanzfrequenz (nahe der TO-Phonenenfrequenz). Jedoch verhalten sich die Polaritonen wie Photonen in dem nicht-resonanten niederfrequenten THz-Bereich, wo ein Signal-Photon bei der THz-Frequenz ($\omega_T$) und ein Idler-Photon ($\omega_i$) parametrisch aus einem bereitgestellten, in den Kristall eingestrahlten Pump-Photon ($\omega_p$) erzeugt werden. Gemäß dem Energieerhaltungssatz gilt dabei $\omega_p = \omega_T + \omega_i$. Dabei stehen die Indizes p für Pump, T für THz und i für Idler. In dem stimulierten Streuprozeß gilt auch der Impulserhaltungssatz $\vec{k}_p = \vec{k}_i + \vec{k}_T$. Dies führt zu einem winkeldispersiven Verhalten der Idler- und THz-Wellen.

In einer Ausführungsform wird eine kohärente THz-Welle daher durch Verwenden eines optischen Resonators für die Idler-Welle effizient erzeugt und eine kontinuierliche und breite Abstimmbarkeit der Frequenz der erzeugten THz-Welle kann zweckmäßigerweise durch Änderung des Winkels zwischen dem einfallenden Pumpstrahl und der Resonatorachse erreicht werden.

In einer Ausführungsform der vorliegenden Erfindung liegt die zur Erzeugung der THz-Welle verwendete Pumpstrahlung im nahinfraroten Spektralbereich. Zu beachten ist, daß der nichtlinear optische Kristall in einer Ausführungsform nur mit einer einzigen Pump-Wellenlänge gepumpt wird und durch den parametrischen Prozeß sowohl eine THz-Welle als auch eine Idler-Welle erzeugt werden, welche die oben beschriebenen Energieerhaltungs- und Impulserhaltungsgesetze erfüllen.

Dabei ist es in einer Ausführungsform der Erfindung notwendig, die durch die parametrische Oszillation in dem nichtlinear optischen Kristall erzeugte THz-Welle auf irgendeine Weise aus dem Kristall auszukoppeln, da die Brechungsindizes der typischerweise für den Kristall verwendeten Materialien groß genug sind, um interne Totalreflexion in der kristallerzeugten THz-Welle hervorzurufen. Dazu ist es zweckmäßig, einen oder mehrere Prismenkoppler, beispielsweise aus Silizium, mit dem Kristall zu verbinden, welche eine effektive Auskopplung der generierten THz-Strahlung aus dem Kristall ermöglichen. In einer Ausführungsform der Erfindung wird zum Pumpen des nichtlinear optischen Kristalls ein Laser, vorzugsweise ein gütegeschalteter Nd:YAG-Laser verwendet.

In einer weiteren alternativen Ausführungsform der Erfindung wird der nichtlinear optische Kristall des optisch parametrischen Oszillators zusätzlich zu der Pumpstrahlung mit einer sogenannten Seed-Strahlung beleuchtet. Dabei entspricht die Winkelorientierung sowie die Frequenz des Seed-Strahls dem im Kristall erzeugten Idler-Strahl. Auf diese Weise läßt sich eine Erhöhung der erzeugten THz-Strahlung erreichen.

Im Sinn der vorliegenden Erfindung wird unter THz-Strahlung elektromagnetische Strahlung im Frequenzbereich zwischen 10 GHz und 10 THz verstanden.

Unter einem kohärenten phasenempfindlichen Detektor zur Erfassung von Intensität und Phase im Sinn der vorliegenden Erfindung wird ein photokonduktiver oder elektrooptischer Detektor verstanden.

Dabei bedeutet kohärent im Sinn der vorliegenden Anmeldung, daß eine zum Pumpen des optisch parametrischen Oszillators verwendete elektromagnetische Pumpstrahlung sowie das zur Detektion verwendete optische Referenzsignal zumindest teilweise den gleichen Ursprung haben, d.h. von der gleichen Quelle herstammen und aus diesem Grund eine feste Phasenbeziehung zwischen dem Differenzsignal von Pumpe und Idler und der THz-Strahlung vorliegt.

Ein photokonduktiver Detektor, so wie er in einer Ausführungsform der vorliegenden Erfindung vorgesehen ist, ist ein optoelektronisches Mischerelement, das die zu erfassende THz-Strahlung mit einem optischen Referenzsignal, das eine Intensitätsmodulation mit einer Frequenz aufweist, die gleich der Frequenz der elektromagnetischen THz-Strahlung ist, mischt. Das daraus abgeleitete Mischsignal hängt sowohl von der Intensität bzw. Leistung der auf den Detektor einfallenden THz-Strahlung als auch von der Phasendifferenz zwischen der Intensitätsmodulation des einfallenden optischen Signals und des THz-Signal ab. In einer Ausführungsform weist ein photokonduktiver Detektor mindestens einen photoempfindlichen Halbleiterbereich zwischen mindestens zwei Auslesekontakten auf. In Abhängigkeit von der momentanen Intensität des auf den phasenempfindlichen Detektor einfallenden optischen Referenzsignals werden Ladungsträger in dem photoempfindlichen Bereich des Detektors generiert. Das gleichzeitig auf das Detektorelement einfallende THz-Signal wird vorzugsweise mit Hilfe einer geeigneten Empfängerstruktur, zum Beispiel einer Antenne, in die Kontakte des Detektorelements eingekoppelt, die den photoempfindlichen Bereich des Detektors begrenzen. Das elektrische Wechselfeld, das auf diese Weise an den Kontakten anliegt, führt zu einer Wechselspannung, mit der das Detektorelement beaufschlagt ist. In diesem Wechselfeld bewegen sich die durch die optische Strahlung erzeugten Ladungsträger, wobei der dann durch das Element fließende Strom vom Produkt der durch das optische Referenzsignal erzeugten Ladungsträgerdichte und dem angelegten elektrischen Feld, das durch die THz-Strahlung hervorgerufen wird, abhängt. Auf diese Weise wird in dem Detektor unmittelbar ein Mischsignal aus der einfallenden THz-Welle und dem optischen Referenzsignal gebildet.

Bei einem elektrooptischen Detektor hingegen wird das auf den Detektor einfallende elektromagnetische THz-Feld dazu genutzt, durch Gleichrichtung ein elektrisches Feld an einen elektrooptischen nichtlinearen Kristall anzulegen. Dieser ändert in Abhängigkeit von der angelegten Feldstärke des einfallenden THz-Feldes seine doppelbrechenden Eigenschaften, so daß ein gleichzeitig in den elektrooptischen Kristall einfallendes, beispielsweise linear polarisiertes optisches Referenzsignal eine Änderung seines Polarisationszustands in Abhängigkeit von dem anliegenden THz-Feld erfährt. Die Änderung des Polarisationszustands des optischen Referenzsignals wird dann beispielsweise mit Hilfe des Polarisationsfilters und eines Detektors oder mit Hilfe eines doppelbrechenden Kristalls und einem Referenzdetektor erfaßt. Das erfaßte Signal hängt ebenfalls von dem Mischprodukt aus der einfallenden THz-Welle und dem optischen Referenzsignal ab.

In einer Ausführungsform der vorliegenden Erfindung weist die Vorrichtung zur Erzeugung und Erfassung kohärenter elektromagnetischer Strahlung im THz-Frequenzbereich eine Quelle zur Erzeugung einer elektromagnetischen Pumpstrahlung mit einer ersten Frequenz auf, wobei die Quelle zur Erzeugung der elektromagnetischen Pumpstrahlung, der optisch parametrische Oszillator und der phasenempfindliche Detektor so eingerichtet sind, daß bei dem Betrieb der Vorrichtung zumindest ein Teil der Pumpstrahlung in den optisch parametrischen Oszillator geleitet wird und ein Teil der Pumpstrahlung in den kohärenten phasenempfindlichen Detektor geleitet wird. Auf diese Weise stammen die elektromagnetische Pumpstrahlung zum Treiben des optisch parametrischen Oszillators und das optische Referenzsignal, welches zum Betrieb des kohärenten phasenempfindlichen Detektors benötigt wird, aus der gleichen Quelle.

Dabei bedeutet die allgemeine Formulierung, daß die Elemente "eingerichtet sind", daß eine entsprechende Spiegel- oder Strahlführungsanordnung zur Leitung der elektromagnetischen Pumpstrahlung vorgesehen ist.

In einer weiteren Ausführungsform der Erfindung sind der optisch parametrische Oszillator und der phasenempfindliche Detektor so eingerichtet, daß bei dem Betrieb der Vorrichtung zumindest ein Teil der elektromagnetischen Pumpstrahlung, die durch den optisch parametrischen Oszillator hindurchtritt, in den phasenempfindlichen Detektor geleitet wird, wobei in dem optisch parametrischen Oszillator elektromagnetische Strahlung mit einer zweiten, von der Frequenz der Pumpstrahlung und von der THz-Frequenz verschiedenen Frequenz erzeugt wird und wobei der optisch parametrische Oszillator und der kohärente phasenempfindliche Detektor so eingerichtet sind, daß im Betrieb der Vorrichtung die elektromagnetische Strahlung mit der zweiten Frequenz räumlich mit der Pumpstrahlung überlagert in den kohärenten phasensensitiven Detektor einfällt.

Wird der optisch parametrische Oszillator mit einer geeigneten elektromagnetischen Pumpstrahlung betrieben, so wird aus Gründen der Energie- und Impulserhaltung neben dem elektromagnetischen THz-Signal auch ein sogenanntes Idler-Sginal in einem dritten Frequenzbereich erzeugt, wobei die Frequenz der THz-Strahlung gerade der Differenz zwischen Frequenz der in den optisch parametrischen Oszillator eingestrahlten Pumpstrahlung und dem Idler-Signal mit der dritten Frequenz ist. Werden die durch den nichtlinear optischen Kristall des optisch parametrischen Oszillators hindurchtretende Pumpstrahlung und das erzeugte Idler-Signal einander räumlich überlagert, so weist das Überlagerungssignal eine Schwebung mit der Frequenz der in dem optisch parametrischen Oszillator erzeugten THz-Strahlung auf. Aufgrund des identischen Entstehungsprozesses in dem nichtlinear optischen Kristall des optisch parametrischen Oszillators sind die Intensitätsmodulation des Schwebungssignals und die elektromagnetische THz-Strahlung phasenstarr aneinander gekoppelt. Das räumlich überlagerte Signal aus Pump- und Idler-Welle dient dann als Referenzsignal für den kohärenten phasenempfindlichen Detektor.

In einer weiteren Ausführungsform der Erfindung weist die Vorrichtung einen Strahlteiler auf, der zwischen der Quelle zur Erzeugung der elektromagnetischen Pumpstrahlung und dem optisch parametrischen Oszillator angeordnet ist und der im Betrieb der Vorrichtung die elektromagnetische Pumpstrahlung in zwei Teil teilt, so daß der erst Teil in den optisch parametrischen Oszillator geleitet wird und der zweite Teil in den kohärenten phasenempfindlichen Detektor geleitet wird. Auf diese Weise kann ein Teil der Pumpstrahlung zum Treiben des kohärenten phasenempfindlichen Detektors abgezweigt werden, bevor die Pumpstrahlung in den optisch parametrischen Oszillator eintritt.

In einer weiteren alternativen Ausführungsform der vorliegenden Erfindung weist die Vorrichtung eine Quelle zur Erzeugung elektromagnetischer Strahlung mit einer zweiten Frequenz auf, wobei die Quelle zur Erzeugung der elektromagnetischen Strahlung mit der zweiten Frequenz, der optisch parametrische Oszillator und der phasenempfindliche Detektor so eingerichtet sind, daß beim Betrieb der Vorrichtung ein erster Teil der elektromagnetischen Strahlung mit der zweiten Frequenz in den optisch parametrischen Oszillator geleitet wird und ein zweiter Teil des Pumpstrahls in den phasenempfindlichen Detektor geleitet wird. Diese elektromagnetische Strahlung der zweiten Frequenz dient als sogenannte Seed-Strahlung für den optisch parametrischen Oszillator und ermöglicht eine spektrale Einschränkung der emittierten THz-Strahlung sowie eine Erhöhung der Intensität der abgestrahlten THz-Strahlung und ermöglicht darüber hinaus eine einfachere Abstimmung der abgestrahlten THz-Frequenz.

In noch einer weiteren Ausführungsform der Erfindung weist die Vorrichtung einen Strahlteiler auf, der zwischen der Quelle zur Erzeugung der elektromagnetischen Strahlung mit der zweiten Frequenz und dem optisch parametrischen Oszillator angeordnet ist und der im Betrieb der Vorrichtung die elektromagnetische Strahlung mit der zweiten Frequenz in zwei Teile teilt, so daß der erste Teil in den optisch parametrischen Oszillator einfällt und der zweite Teil in den kohärenten phasenempfindlichen Detektor einfällt.

Die erfindungsgemäße Vorrichtung kann zweckmäßigerweise in einem THz-Spektroskopiesystem oder in einem bildgebenden THz-System verwendet werden.

Die Aufgabe wird auch durch ein Verfahren gemäß der vorliegenden Erfindung zur Erzeugung und Erfassung kohärenter elektromagnetischer Strahlung im THz-Frequenzbereich gemäß Anspruch 10 gelöst.

Erzeugung der elektromagnetischen Strahlung im THz-Frequenzbereich ein optisch parametrischer Oszillator verwendet wird und zur Erfassung von Intensität und Phase der von dem optisch parametrischen Oszillator erzeugten elektromagnetischen Strahlung ein kohärenter phasenempfindlicher Detektor verwendet wird.

Weitere Vorteile, Merkmale und Anwendungsmöglichkeiten der vorliegenden Erfindung werden anhand der folgenden Beschreibung bevorzugter Ausführungsformen und der dazugehörigen Figuren deutlich.

Figur 1     zeigt schematisch eine Vorrichtung zur Erzeugung und Erfassung elektromagnetischer THz-Strahlung gemäß einer ersten Ausführungsform der vorliegendenl Erfindung.

Figur 2     zeigt schematisch den Aufbau eines photokonduktiven Detektors gemäß der vorliegenden Erfindung.

Figur 3     zeigt schematisch eine weitere Ausführungsform des erfindungsgemäßen Systems mit einem Seed-Laser.

Figur 4     zeigt schematisch den Aufbau einer erfindungsgemäßen Vorrichtung mit einem elektrooptischen Detektor.

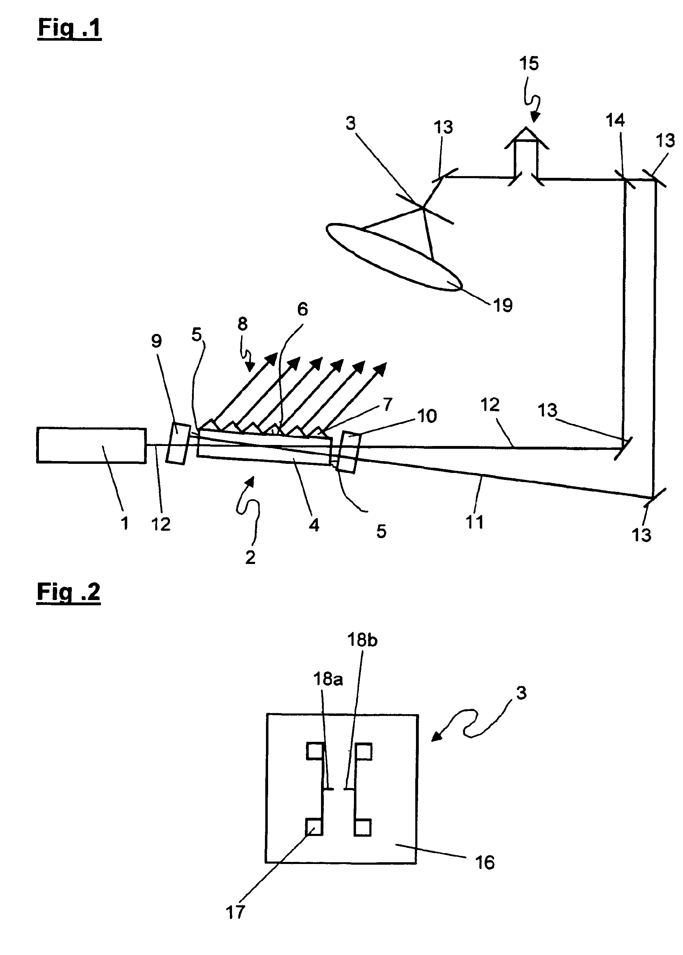

In Figur 1 ist eine erste Ausführungsform der erfindungsgemäßen Vorrichtung zur Erzeugung und Erfassung kohärenter elektromagnetischer Strahlung im THz-Frequenzbereich schematisch dargestellt. Die Vorrichtung besteht im wesentlichen aus drei Elementen, einem Pumplaser 1, einem optisch parametrischen Oszillator 2 zur Erzeugung der elektromagnetischen Strahlung im THz-Frequenzbereich sowie einem kohärenten phasenempfindlichen Detektor 3.

In der dargestellten Ausführungsform ist der Pumplaser 1 ein gütegeschalteter Nd:YAG-Laser mit einer Wellenlänge von 1,064 $\mu$m, einem Strahldurchmesser von 1,5 mm, einer Impulsdauer von 25 ns und einer Wiederholrate der optischen Impulse von 50 Hz. Die typische Energie pro optischem Impuls in einem solchen System beträgt 30 mJ pro Impuls.

Der optisch parametrische Oszillator 2 weist in der dargestellten Ausführungsform einen Lithiumniobat (LiNO$_3$) Kristall 4 mit einer Länge von 65 mm sowie einer Breite und Höhe von 5 x 6 mm auf. H b Die Einkoppelflächen 5 des Kristalls sind in optischer Qualität poliert und mit einer Antireflex-Beschichtung für die Pumpwellenlänge versehen. Auf einer Seitenfläche 6 des Kristalls sind Prismen 7 aus Silizium angeordnet, um eine bessere Auskopplung der im Kristall 4 erzeugten THz-Welle 8 zu ermöglichen. Die rechtwinkligen Prismen sind aus hochresistivem Silizium hergestellt. Um die Erzeugung der THz-Welle 8 so effizient wie möglich zu machen, weist der optisch parametrische Oszillator 2 darüber zwei Spiegel 9, 10 auf, die einen optischen Resonator für die im Kristall erzeugte Idler-Welle 11 bilden. Dabei sind die Spiegel so ausgestaltet, daß ihre Substrate nur teilweise mit einer für die Idler-Welle 11 reflektierenden Beschichtung versehen sind, so daß die Pumpstrahlung 12 ungehindert durch sie hindurch treten kann. Die durch den optisch parametrischen Oszillator 2 hindurchtretende Pumpstrahlung 12 sowie die im optisch parametrischen Oszillator generierte Idler-Welle werden mit Hilfe einer Anordnung von Spiegeln 13 auf den photokonduktiven Detektor 3 geleitet. Dabei werden die Pumpwelle 12 und die Idler-Welle 11 an einem Strahlteiler 14 einander räumlich überlagert, so daß sie hinter dem Strahlteiler 14 kopropagieren und ein optisches Schwebungssignal mit einer Schwebungsfrequenz gebildet wird, die gleich der Differenzfrequenz zwischen Pumpwelle 12 und Idler-Welle 11, d.h. der THz-Frequenz ist. Vor dem Detektor 3 ist eine optische Verzögerungsstrecke 15 vorgesehen, die es ermöglicht, die Laufzeit des aus Pumpwelle 12 und Idler-Welle 11 gebildeten Referenzsignals zu verändern, d.h. die Phasendifferenz zwischen der THz-Welle 8 und dem Referenzsignal zu ändern. Im Betrieb der Vorrichtung ist darauf zu achten, daß der optische Weg von der Laserquelle 1 zu dem Detektor sowohl auf dem THz-Strahlpfad als auch auf dem Referenzstrahlpfad in etwa gleich lang sind.

In einer alternativen, nicht gezeigten Ausführungsform ist es dabei zweckmäßig, wenn die optischen Strahlpfade anders als dargestellt, nicht mit Hilfe von Bulkoptik, sondern mit Hilfe von optischen Fasern realisiert werden.

In Figur 2 ist der Aufbau des photokonduktiven Detektors 3 aus Figur 1 schematisch vergrößert dargestellt. Der Detektor besteht aus einem photoleitfähigen Halbleitersubstrat, in dem gezeigten Beispiel aus einem bei niedrigen Temperaturen gewachsenen Galliumarsenidsubstrat 16 und einer darauf angeordneten metallischen Kontaktstruktur 17. Dabei besteht die Kontaktstruktur im wesentlichen aus einem unterbrochenen Dipol 18a, 18b, der als photokonduktiver Schalter für das Referenzsignal aus den räumlich überlagerten Pump- und Idler-Wellen sowie als resonante Antenne für die einfallende THz-Strahlung 8 dient.

Mit der beschriebenen Anordnung lassen sich durch Änderung der Phasenanpassungsbedingung, d.h.

durch Änderung des Winkels zwischen der Pumpstrahlung 12 und den Kristallachsen, THz-Wellenlängen in einem Bereich von 140 bis 310 μm erzeugen und mit Hilfe des Detektors 3 erfassen.

Zum Abstimmen der Wellenlänge ist dafür der optisch parametrische Oszillator 2 drehbar angeordnet, so daß der Einfallswinkel der Pumpstrahlung 12 verändert werden kann. Da eine solche Abstimmung der erzeugten THz-Strahlung auch den Strahlengang der von dem optisch parametrischen Oszillator abgestrahlten THz-Welle 8 verändert, muß der Detektor entsprechend in seiner Position verändert werden, was eine faseroptische Kopplung des Referenzsignals an den Detektor 3 wünschenswert macht.

In der in Figur 1 gezeigten Ausführungsform wird die von dem optisch parametrischen Oszillator abgestrahlte THz-Welle 8 mit Hilfe einer Kunststofflinse 19 oder auch mit einem anderen, beispielsweise reflektierenden Element, auf einen einzigen Detektor, so wie er in Figur 2 schematisch dargestellt ist, gebündelt.

Aufgrund der hohen abgestrahlten THz-Leistung ist es jedoch alternativ dazu möglich, die THz-Welle flächig mit einer Matrixanordnung von nebeneinander angeordneten Detektorstrukturen, die jeweils einen Bildpunkt (Pixel) bilden, zu erfassen und so ein zweidimensionales Bild aufzunehmen. Dazu ist es zweckmäßig, das Referenzsignal vorzugsweise mit Hilfe von faseroptischen Komponenten in eine Anzahl von etwa gleich starken Teilsignalen aufzuspalten, die dann jeweils als Referenzsignal für einen einzelnen Detektor in der Matrixanordnung dienen.

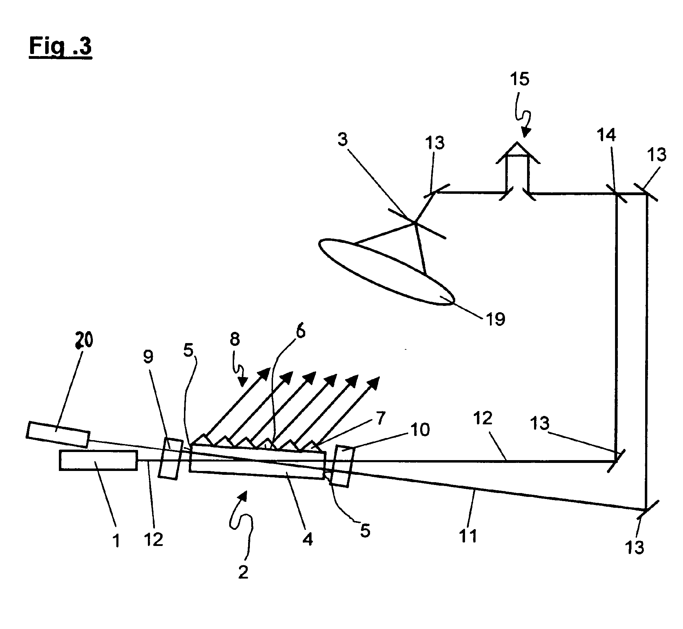

In Figur 3 ist eine alternative Ausführungsform des Aufbaus aus Figur 1 gezeigt, wobei sich diese Ausführungsform von der aus Figur 1 dadurch unterscheidet, daß zusätzlich ein sogenannter Seed-Laser 20 vorgesehen ist, der parallel zu dem zu erwartenden in dem optisch parametrischen Oszillator erzeugten Idler-Signal in den Kristall 4 eingestrahlt wird. Auf diese Weise kann eine Erhöhung der abgestrahlten THz-Leistung erreicht werden. Darüber hinaus wird die Bandbreite des abgestrahlten THz-Signals 8 durch den zusätzlichen Seed-Laser 20 beschränkt.

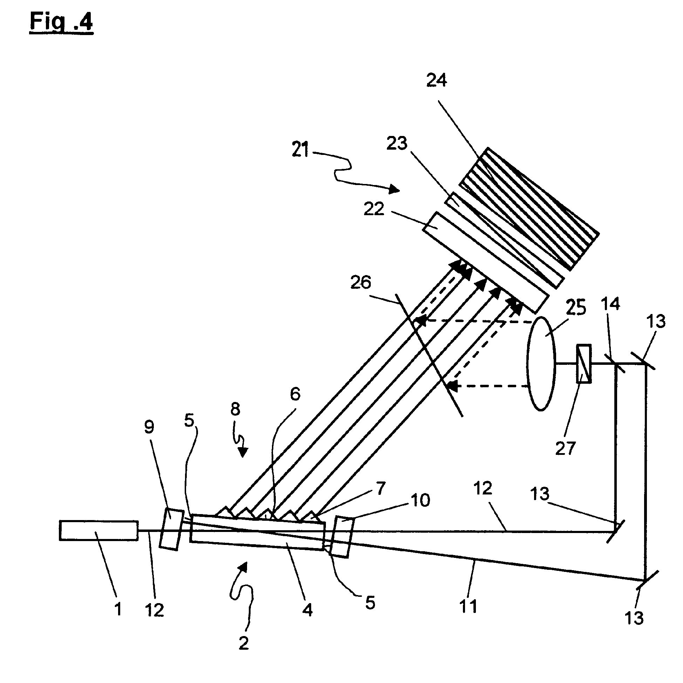

In Figur 4 ist eine alternative Ausführungsform der erfindungsgemäßen Vorrichtung dargestellt, wobei der photokonduktive Detektor aus Figur 1 durch einen elektrooptischen Detektor 21 ersetzt ist. Der dargestellte elektrooptische Detektor besteht aus einem elektrooptischen ZnTe-Kristall 22, einem Polarisator 23 für das optische Referenzsignal sowie einer CCD-Kamera 24. Das Referenzsignal, das wieder aus der räumlich überlagerten Pumpwelle 12 sowie der Idler-Welle 11 erzeugt wird, wird mit Hilfe einer Linsenanordnung 25 kollimiert und aufgeweitet, so daß der Strahldurchmesser des optischen Referenzsignals in etwa dem Strahldurchmesser des THz-Signals 8 entspricht. Mit Hilfe eines Pellicle-Strahlteilers 26, einer dünnen Kunststoffmembran, die mit einer dielektrischen Beschichtung versehen ist, werden aufgeweitete optische Referenzsignale und das THz-Signal 8 einander räumlich kolinear überlagert. Dabei ist der Pellicle-Strahlteiler 26 für das THz-Signal 8 transparent, während er für das optische Referenzsignal als Spiegel dient.

Das optische Referenzsignal ist linear polarisiert, wobei zur besseren Ausprägung des Polarisationszustands vor der Linsenanordnung 25 ein weiterer Polarisator 27 vorgesehen ist. Dieser kann jedoch in den Ausführungsformen auch weggelassen werden. In dem elektrooptischen Kristall 22 wird die lineare Polarisation des Referenzsignals in Abhängigkeit von der THz-Feldstärke am jeweiligen Ort in dem Kristall 22 gedreht. Durch die Anordnung eines weiteren Polarisators 23, der als Analysator dient, hinter dem Kristall 22 wird diese lokale Drehung der Polarisation des einfallenden optischen Referenzsignals in Abhängigkeit vom Ort in eine ortsabhängige Intensitätsverteilung umgesetzt, die mit Hilfe der CCD-Kamera flächig erfaßt wird.

Da die momentane THz-Feldstärke in dem Kristall 22 sowohl von der Feldamplitude als auch von der Phasenlage abhängt, läßt sich mit dieser Anordnung nicht nur die Intensität der THz-Strahlung erfassen, sondern auch deren Phasenlage in Bezug auf das optische Referenzsignal.

Für Zwecke der ursprünglichen Offenbarung wird darauf hingewiesen, daß sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Obwohl die vorangehende Beschreibung viele Details enthält, sollen diese nicht als Beschränkungen des Schutzbereichs der Erfindung verstanden werden, sondern lediglich als Beispiele für eine bevorzugte Ausführungsform. Viele Änderungen und Variationen sind möglich. Entsprechend soll der Schutzbereich der Erfindung nicht durch die dargestellten Ausführungsformen, sondern durch die beigefügten Ansprüche bestimmt werden.

## Bezugszeichenliste

| | |
|---|---|
| 1 | Pumplaser |
| 2 | optisch parametrischer Oszillator |
| 3 | kohärenter phasenempfindlicher, optoelektrischer Detektor |
| 4 | Lithiumniobat-Kristall |

| | |
|---|---|
| 5 | Ein- und Auskoppelflächen des Kristalls |
| 6 | Seitenflächen des Kristalls |
| 7 | Prismen |
| 8 | THz-Welle |
| 9 | Spiegel |
| 10 | Spiegel |
| 11 | Idler-Welle |
| 12 | Pumpwelle |
| 13 | Spiegel |
| 14 | Strahlteiler |
| 15 | Verzögerungsstrecke |
| 16 | Galliumarsenid-Substrat |
| 17 | Kontaktstruktur |
| 18A, 18B | Dipol |
| 19 | Kunststofflinse |
| 20 | Seed-Laser |
| 21 | elektrooptischer Detektor |
| 22 | ZnTe-Kristall |
| 23 | Polarisator |
| 24 | CCD-Kamera |
| 25 | Linsenanordnung |
| 26 | Pellicle-Strahlteiler |
| 27 | Polarisator |

**Patentansprüche**

1. Vorrichtung zur Erzeugung und Erfassung kohärenter elektromagnetischer Strahlung (8) im THz-Frequenzbereich mit

einer Quelle (1) zur Erzeugung einer elektromagnetischen Pumpstrahlung (12) mit einer ersten Frequenz,

einem optisch parametrischen Oszillator (2) zur Erzeugung elektromagnetischer Strahlung im THz-Frequenzbereich (8) und

einem kohärenten phasenempfindlichen Detektor (3, 21) zur Erfassung von Intensität und Phase der von dem optisch parametrischen Oszillator (2) erzeugten elektromagnetischen Strahlung (8)

wobei die Quelle (1) zur Erzeugung der elektromagnetischen Pumpstrahlung (12), der optisch parametrische Oszillator (2) und der kohärente phasenempfindliche Detektor (3, 21) so eingerichtet sind, daß bei dem Betrieb der Vorrichtung zumindest ein Teil der elektromagnetischen Pumpstrahlung (12), die durch den optisch parametrischen Oszillator (2) hindurchtritt, in den kohärenten phasenempfindlichen Detektor (3, 21) geleitet wird, wobei in dem optisch parametrischen Oszillator (2) elektromagnetische Strahlung mit einer zweiten, von der Frequenz der Pumpstrahlung (12) und von der THz-Frequenz verschiedenen Frequenz erzeugt wird, **dadurch gekennzeichnet, daß** der optisch parametrische Oszillator (2) und der kohärente phasenempfindliche Detektor (3, 21) so eingerichtet sind, daß im Betrieb der Vorrichtung die elektromagnetische Strahlung mit der zweiten Frequenz räumlich mit der Pumpstrahlung (12) überlagert in den kohärenten phasensensitiven Detektor (3, 21) einfällt.

2. Vorrichtung nach Anspruch 1, **dadurch gekennzeichnet, daß** sie eine Quelle (20) zur Erzeugung elektromagnetischer Strahlung mit einer Frequenz, die der zweiten Frequenz der im optisch parametrischen Oszillator erzeugten elektromagnetischen Strahlung entspricht, aufweist, wobei die Quelle (20) zur Erzeugung der elektromagnetischer Strahlung mit der zweiten Frequenz, der optisch parametrische Oszillator (2) und der kohärente phasenempfindliche Detektor (3, 21) so eingerichtet sind, daß im Betrieb der Vorrichtung die elektromagnetische Strahlung mit der zweiten Frequenz in den optisch parametrischen Oszillator (2) geleitet wird und dann ein Teil der elektromagnetischen Strahlung mit der zweiten Frequenz in den kohärenten phasenempfindlichen Detektor (3, 21) geleitet wird.

3. Vorrichtung nach Anspruch 1 oder 2, **dadurch gekennzeichnet, daß** der kohärente phasenempfindliche Detektor (21) eine Matrixanordnung von Bildpunkten aufweist.

4. Vorrichtung nach einem der Ansprüche 1 bis 3, **dadurch gekennzeichnet, daß** der kohärente phasenempfindlichen Detektor ein elektrooptischer Detektor (21) ist.

5. Vorrichtung nach einem der Ansprüche 1 bis 3; **dadurch gekennzeichnet, daß** der kohärente phasenempfindlichen Detektor ein photokonduktiver Detektor (3) ist.

6. THz-Spektroskopiesystem mit einer Vorrichtung nach einem der Ansprüche 1 bis 5.

7. Bildgebendes THz-System mit einer Vorrichtung nach einem der Ansprüche 1 bis 6.

8. Verfahren zur Erzeugung und Erfassung kohärenter elektromagnetischer Strahlung im THz-Frequenzbereich, wobei eine Quelle (1) zur Erzeugung einer elektromagnetischen Pumpstrahlung (12) mit einer ersten Frequenz verwendet wird, wobei ein optisch parametrischer Oszillator zur Erzeugung elektromagnetischer Strahlung im THz-Frequenzbereich verwendet wird, wobei ein kohärenter phasenempfindlicher Detektor zur Erfassung von Intensität und Phase der von dem optisch parametrischen Oszillator erzeugten elektromagnetische Strahlung verwendet wird, wobei zumindest ein Teil der elektromagnetischen Pumpstrahlung (12), die durch den optisch parametrischen Oszillator (2) hindurchtritt, in den kohärenten phasenempfindlichen Detektor (3, 21) geleitet wird, wobei in dem optisch parametrischen Oszillator (2) elektromagnetische Strahlung mit einer zweiten, von der Frequenz der Pumpstrahlung (12) und von der THz-Frequenz verschiedenen Frequenz erzeugt wird, **dadurch gekennzeichnet, daß** die elektromagnetische Strahlung mit der zweiten Frequenz räumlich mit der Pumpstrahlung (12) überlagert in den kohärenten phasensensitiven Detektor (3, 21) einfällt.

**Claims**

1. A device for generating and detecting coherent electromagnetic radiation (8) in the THz frequency range, comprising
a source (1) for generating an electromagnetic pump radiation (12) at a first frequency, an optically parametric oscillator (2) for generating electromagnetic radiation in the THz frequency range (8), and
a coherent phase-sensitive detector (3, 21) for detecting intensity and phase of the electromagnetic radiation (8) generated by the optically parametric oscillator (2), wherein the source (1) for generating the electromagnetic pump radiation (12), the optically parametric oscillator (2) and the coherent phase-sensitive detector (3, 21) are so adapted that in operation of the device at least a part of the electromagnetic pump radiation (12) which passes through the optically parametric oscillator (2) is passed into the coherent phase-sensitive detector (3, 21), wherein in the optically parametric oscillator (2) electromagnetic radiation at a second frequency different from the frequency of the pump radiation (12) and from the THz frequency is generated, **characterised in that** the optically parametric oscillator (2) and the coherent phase-sensitive detector (3, 21) are so adapted that in operation of the device the electromagnetic radiation at the second frequency is passed spatially overlapping with the pump radiation (12) into the coherent phase-sensitive detector (3, 21).

2. The device according to claim 1 **characterised in that** it has a source (20) for generating electromagnetic radiation at a frequency, which corresponds to the second frequency of the electromagnetic radiation generated in the optically parametric oscillator, wherein the source (20) for generating the electromagnetic radiation at the second frequency, the optically parametric oscillator (2) and the coherent phase-sensitive detector (3, 21) are so adapted that in operation of the device the electromagnetic radiation at the second frequency is passed into the optically parametric oscillator (2) and then a part of the electromagnetic radiation at the second frequency is passed into the coherent phase-sensitive detector (3, 21).

3. The device according to claim 1 or 2 **characterised**

**in that** the coherent phase-sensitive detector (21) has a matrix arrangement of pixels.

4. The device according to one of claims 1 to 3 **characterised in that** the coherent phase-sensitive detector is an electrooptical detector (21).

5. The device according to one of claims 1 to 3 **characterised in that** the coherent phase-sensitive detector is a photoconductive detector (3).

6. A THz spectroscopy system having a device according to one of claims 1 to 5.

7. An imaging THz system having a device according to one of claims 1 to 6.

8. A method of generating and detecting coherent electromagnetic radiation in the THz frequency range, wherein a source (1) for generating an electromagnetic pump radiation (12) at a first frequency is used, wherein an optically parametric oscillator is used for generating electromagnetic radiation in the THz frequency range, wherein a coherent phase-sensitive detector is used for detecting intensity and phase of the electromagnetic radiation generated by the optically parametric oscillator, wherein at least a part of the electromagnetic pump radiation (12), which passes through the optically parametric oscillator (2), is passed into the phase-sensitive detector (3, 21), wherein in the optically parametric oscillator (2) electromagnetic radiation at a second frequency different from the frequency of the pump radiation (12) and from the THz frequency is generated, **characterised in that** the electromagnetic radiation at the second frequency is passed spatially overlapping with the pump radiation (12) into the coherent phase-sensitive detector (3, 21).

**Revendications**

1. Dispositif de production et de détection d'un rayonnement (8) électromagnétique cohérent dans la gamme de fréquences des THz, avec
une source (1) pour la production d'un rayonnement de pompage (12) électromagnétique avec une première fréquence,
un oscillateur (2) paramétrique optique pour la production d'un rayonnement électromagnétique dans la gamme de fréquences des THz (8) et
un détecteur (3, 21) cohérent à sensibilité de phase pour la détection de l'intensité et de la phase du rayonnement électromagnétique (8) produit par l'oscillateur (2) paramétrique optique,
la source (1) pour la production du rayonnement de pompage (12) électromagnétique, l'oscillateur (2) paramétrique optique et le détecteur (3, 21) cohérent à sensibilité de phase étant agencés de telle sorte que, lors du fonctionnement du dispositif, au moins une partie du rayonnement de pompage (12) électromagnétique qui traverse l'oscillateur (2) paramétrique optique est conduite dans le détecteur (3, 21) cohérent à sensibilité de phase, un rayonnement électromagnétique étant produit dans l'oscillateur (2) paramétrique optique avec une deuxième fréquence différente de la fréquence du rayonnement de pompage (12) et de la fréquence THz, **caractérisé en ce que** l'oscillateur (2) paramétrique optique et le détecteur (3, 21) cohérent à sensibilité de phase sont agencés de telle sorte que, pendant le fonctionnement du dispositif, le rayonnement électromagnétique ayant la deuxième fréquence arrive dans le détecteur (3, 21) cohérent à sensibilité de phase en étant spatialement recouvert par le rayonnement de pompage (12).

2. Dispositif selon la revendication 1, **caractérisé en ce qu'**il présente une source (20) pour la production d'un rayonnement électromagnétique avec une fréquence qui correspond à la deuxième fréquence du rayonnement électromagnétique produit dans l'oscillateur (2) paramétrique optique, la source (20) pour la production du rayonnement électromagnétique ayant la deuxième fréquence, l'oscillateur (2) paramétrique optique et le détecteur (3, 21) cohérent à sensibilité de phase étant agencés de telle sorte que, pendant le fonctionnement du dispositif, le rayonnement électromagnétique ayant la deuxième fréquence est conduit dans l'oscillateur (2) paramétrique optique, puis une partie du rayonnement électromagnétique ayant la deuxième fréquence est conduite dans le détecteur (3, 21) cohérent à sensibilité de phase.

3. Dispositif selon la revendication 1 ou 2, **caractérisé en ce que** le détecteur (21) cohérent à sensibilité de phase présente un agencement matriciel de points d'image.

4. Dispositif selon l'une des revendications 1 à 3, **caractérisé en ce que** le détecteur cohérent à sensibilité de phase est un détecteur (21) électrooptique.

5. Dispositif selon l'une des revendications 1 à 3, **caractérisé en ce que** le détecteur cohérent à sensibilité de phase est un détecteur (3) photoconducteur.

6. Système de spectroscopie THz avec un dispositif selon l'une des revendications 1 à 5.

7. Système THz d'imagerie avec un dispositif selon l'une des revendications 1 à 6.

8. Procédé de production et de détection d'un rayonnement électromagnétique cohérent dans la gamme de fréquences des THz, une source (1) étant utilisée pour la production d'un rayonnement de pompage (12) électromagnétique ayant une première fréquence, un oscillateur paramétrique optique étant utilisé pour la production d'un rayonnement électromagnétique dans la gamme de fréquences des THz, un détecteur cohérent à sensibilité de phase étant utilisé pour la détection de l'intensité et de la phase du rayonnement électromagnétique produit par l'oscillateur paramétrique optique, au moins une partie du rayonnement de pompage (12) électromagnétique qui traverse l'oscillateur (2) paramétrique optique étant conduite dans le détecteur (3, 21) cohérent à sensibilité de phase, un rayonnement électromagnétique ayant une deuxième fréquence différente de la fréquence du rayonnement de pompage (12) et de la fréquence THz étant produit dans l'oscillateur (2) paramétrique optique, **caractérisé en ce que** le rayonnement électromagnétique ayant la deuxième fréquence arrive dans le détecteur (3, 21) cohérent à sensibilité de phase en étant spatialement recouvert par le rayonnement de pompage (12).

## Fig .1

## Fig .2

**Fig .3**

**Fig .4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6697186 B2

**In der Beschreibung aufgeführte Nicht-Patentliteratur**

- **KODO KAWASE et al.** Terahertz parametric sources and imaging applications. *Semicond. Sci. Technol.,* 2005, vol. 20, S.25 ff
- **R. GUO et al.** Detection of Coherent Tunable THz-Wave Using of Stimulated Polariton Scattering in MgO:LiNbO. *The International Society for Optical Engineering - Nonlinear Optics and Applications III/2007 SPIE US,* 08. Mai 2007, vol. 6582, 65820Z-1, 65820Z-8
- Terahertz Wave Parametric Source. **K. KAWASE et al.** Jounal of Physics D. Applied Physics. IOP Publishing, 07. Februar 2002, vol. 35, R1-R14